Europäisches Patentamt

European Patent Office

Office européen des brevets

(11) Publication number: **0 505 639 A1**

# EUROPEAN PATENT APPLICATION

(21) Application number: **91307893.7**

(51) Int. Cl.5: **B60P 3/10, B60P 1/54**

(22) Date of filing: **29.08.91**

(30) Priority: **27.03.91 GB 9106538**

(43) Date of publication of application:
**30.09.92 Bulletin 92/40**

(84) Designated Contracting States:
**AT BE CH DE DK ES FR GB GR IT LI LU NL SE**

(71) Applicant: **Packham, Christopher**
**36 York Street**
**Broadstairs, Kent CT10 1PB(US)**
Applicant: **Jackson, Peter John**
**Knysna, Kingsgate Bay Road**
**Broadstairs, Kent(GB)**

(72) Inventor: **Packham, Christopher**
**36 York Street**
**Broadstairs, Kent CT10 1PB(US)**
Inventor: **Jackson, Peter John**
**Knysna, Kingsgate Bay Road**
**Broadstairs, Kent(GB)**

(74) Representative: **Williams, John Francis et al**
**WILLIAMS, POWELL & ASSOCIATES 34**
**Tavistock Street**
**London WC2E 7PB(GB)**

(54) **Lifting boats.**

(57) A boat trailer (10) has its own lifting means (20) mountable on it, with an outrigger system (35) for stability. The trailer uses the weight of the tow vehicle (15) to counterbalance the boat when it is swung away from the trailer. The method and apparatus allow a boat to be launched from a trailer when no slipway is available.

FIG.1

The present invention relates to a device and a method for lifting boats and in particular to lifting boats from a boat trailer parked on the quayside off the trailer and into the water.

A problem with launching boats from quays from existing boat trailers is that a slipway is required. The present invention seeks to overcome the above problem.

According to a first aspect of the present invention there is provided a unit for attachment to a boat trailer comprising lifting means for lifting a boat off the trailer, turning means for rotating the lifting means, and outrigger means which can be extended from the unit to support the loads thereon arising in use.

According to a second aspect of the present invention there is provided a boat trailer incorporating a lifting unit having means for lifting a boat off the trailer, turning means for rotating the lifting means over one end of the trailer, and means at the opposite end of the trailer for connection to a vehicle whereby the vehicle acts as a counterweight during the rotation. The lifting unit is preferably provided with one or more outriggers.

According to a third aspect of the present invention there is provided a method of lowering into the water a boat mounted on a trailer towed by a vehicle, comprising positioning the vehicle and trailer at a point substantially above the water level, lifting the boat off the trailer by means of a lifting means, rotating the lifting means so that the boat is above the water and then lowering the boat, using the vehicle to act as a counterbalance to the boat when the lifting means is rotated away from the trailer. Preferably outrigger means are deployed from the trailer before the lifting operation commences.

A preferred embodiment of the present invention will now be described, by way of example only, with reference to the accompanying drawings, of which:

Fig.1 is a side view of a boat trailer fitted with a lifting device in accordance with the present invention;

Fig.2 is a top plan view of the trailer of Fig.1;

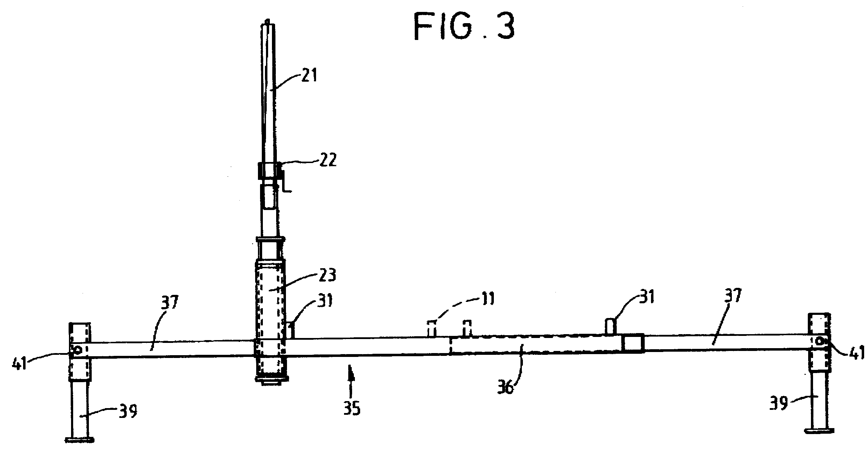

Fig.3 is an enlarged rear view of the lifting device;

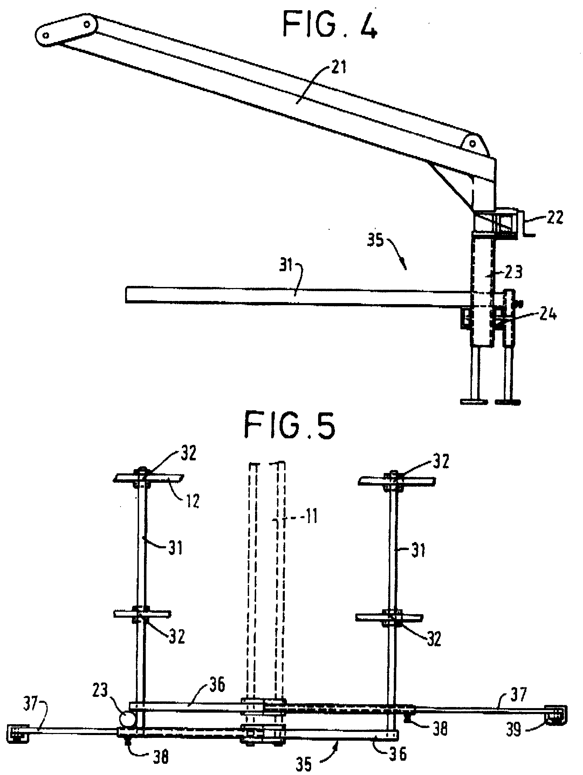

Fig.4 is a side view of the lifting device; and

Fig.5 is a plan view of the lifting device.

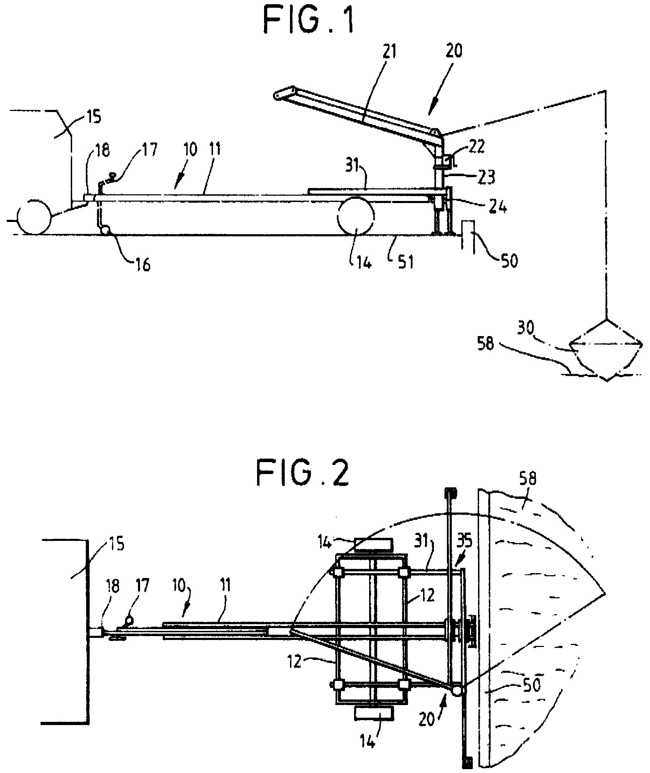

Referring to the drawings, Figs 1 and 2 show a boat trailer 10 comprising a framework having longitudinal struts 11 and transverse bars 12 to which are attached the trailer wheels 14. The front of the trailer is arranged to be attached by a tow-bar arrangement 18 to vehicle 15 and there is also provided a jockey wheel 16 for supporting the front of the trailer when disconnected from the vehicle. The jockey wheel can be moved up and down by means of a jacking handle 17.

As described so far, the trailer is conventional. To this trailer is bolted on a lifting device 20 in accordance with the present invention. The device comprises a davit 21 mounted on a support 23 and operated by a first winch 22 to lift and lower a boat 30, and a second winch 24 for slewing the davit 21 with the suspended boat over the water.

The davit and winches are mounted on a framework 35 comprising struts 31 which are bolted to the transverse members 12 of the trailer as shown at intersections 32 in Fig.5. Framework 35 also comprises hollow transverse struts 36 in which are slidably mounted outrigger members 37. Members 37 can be slid out of struts 36 to a desired extent and locked in this position by pins 38. Feet 39 can be lowered to a desired extent from the ends of the outrigger members and locked in this position by pins 41.

In use the vehicle 15 and trailer 10 are reversed substantially at right-angles up to a quayside 50. The outrigger members 37 are then moved from their position during transport, i.e fully inside members 36, to their extended position and locked by pins 38. Feet 39 are then lowered so that they are slightly above, or just touch, the ground 51. The jockey wheel 16 is then jacked down to load the outrigger system to provide a stable configuration.

Davit 21 is then operated by winch 22 to lift the boat 30 and associated slings from the trailer. Winch 24 is then used to rotate the davit and boat through an arc 55 of substantially 180° so that the boat is then suspended over the water 58. Winch 22 is then used to lower the boat into the water, preferably adjacent to a vertical ladder for access to the boat. During the slewing and lowering procedures, the vehicle 15, still connected by the tow-bar arrangement, acts as a counterweight to keep the trailer 10 stable. For recovery of the boat from the water, the procedure is reversed.

An advantage of the above-described arrangement is that it enables trailer-mounted boats to be launched at previously-inaccessible locations. It is simple to use and relatively lightweight. A particular advantage is that the weight of the towing vehicle is exploited as ballast. Live loads of up to 2 tonnes can be handled.

Numerous modifications can be made to the above-described arrangement. For example, only one outrigger member may be provided, in particular where the davit is constrained to slew to only one side of the vehicle; in this case the single outrigger is provided only at that side. For light boats and with a suitably heavy vehicle 15, both outriggers may be dispensed with. For heavy boats and/or for increased stability, and/or to allow the vehicle to drive away before launching the boat, more than two outriggers can be provided.

The lifting device 20 is preferably provided as an integral unit which is simply bolted on to a conventional trailer 10. An advantage of this is that the device can be removed when not required, thus reducing the weight of the trailer. Alternatively the trailer and lifting device may be manufactured as a single article. The device may be of aluminium, having the advantage of light weight, or mild steel or other suitable material; in any case it is easy to handle.

To increase the lifting height of the device, davit 21 may incorporate a hinged boom arrangement.

The winches 22 and 24 can be hand-driven or electrically-operated, e.g. by conventional davit motors run from a twelve-volt battery.

**Claims**

1.  A unit for attachment to a boat trailer comprising lifting means (21,22) for lifting a boat off the trailer, turning means (24) for rotating the lifting means, and outrigger means (35) which can be extended from the unit to support the loads thereon arising in use.

2.  A boat trailer (10) characterised by a lifting unit (20) having means for lifting (21,22) a boat off the trailer, turning means (24) for rotating the lifting means over one end of the trailer (10), and means (18) at the opposite end of the trailer for connection to a vehicle (15) whereby the vehicle acts as a counterweight during the rotation.

3.  A boat trailer as claimed in claim 2, comprising outrigger means (35) which can be extended from the unit (20) to support the loads thereon arising in use.

4.  A boat trailer as claimed in claim 3, wherein the outrigger means (35) include one or more telescopic beams (36,37).

5.  A boat trailer as claimed in claim 2, 3 or 4 wherein the lifting unit (20) is removably attached to the trailer (10).

6.  A boat trailer as claimed in any one of claims 2 to 5 wherein the lifting means (20) has an arm (21) which pivots in a vertical plane.

7.  A boat trailer as claimed in claim 6 wherein the arm (21) is telescopic or hinged so as to increase/decrease its reach.

8.  A boat trailer as claimed in any of claims 2 to 7 wherein the lifting means (20) lifts the boat off the trailer by tension in a winch cable supporting the boat.

9.  A method of lowering into the water a boat mounted on a trailer towed by a vehicle, comprising positioning the vehicle and trailer (10) at a point substantially above the water level (58), lifting the boat off the trailer by means of a lifting means (20) mounted on the trailer rotating the lifting means so that the boat is above the water and then lowering the boat, using the vehicle to act as a counterbalance to the boat when the lifting means is rotated away from the trailer.

10. A method as claimed in claim 9, in which outrigger means (35) are deployed from the trailer (10) before the lifting operation commences.

# FIG.1

# FIG.2

FIG. 3

# FIG. 4

# FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2 776 761 (C. LOVELACE) | 1 | B60P3/10 |
| Y | * figures 1,2 * | 2-10 | B60P1/54 |
| | --- | | |
| X | US-A-3 650 421 (W.MILLER) | 1 | |
| Y | * abstract; figures * | 2-10 | |
| | --- | | |
| Y | US-A-4 889 465 (R.BROOKS) | 2-10 | |
| | * abstract; figures * | | |
| | --- | | |
| A | US-A-3 734 319 (K.FRISK) | 1,5,9 | |
| | * abstract; figures * | | |
| | ----- | | |

TECHNICAL FIELDS
SEARCHED (Int. Cl.5 )

B63C
B60P

The present search report has been drawn up for all claims

| Place of search | Date of completion of the search | Examiner |
|---|---|---|
| THE HAGUE | 12 JUNE 1992 | STIERMAN E.J. |

EPO FORM 1503 03.82 (P0401)